# EUROPEAN PATENT APPLICATION

(11) **EP 2 500 187 A2**
(43) Date of publication of application: **19.09.2012**
(21) Application number: 12159980.7
(22) Date of filing: 16.03.2012
(51) Int. Cl.: B60C 13/00, B60C 17/00

(54) **Tire with thermoplastic sidewall insert**

(30) Priority: 17.03.2011 US 201113050207
(71) Applicant: The Goodyear Tire & Rubber Company, Akron, OH 44316-0001 (US)
(72) Inventor: Mruk, Ralf, L-9164 Lipperscheid (LU); Lechtenboehmer, Annette, L-9048 Ettelbruck (LU)
(74) Representative: Kutsch, Bernd

(57) **Abstract**

A pneumatic tire comprising a sidewall insert is disclosed. The sidewall insert (12) comprises an axially layered thermoplastic (22). Preferably, the tire is a runflat tire (1). Also, a method of manufacturing such a tire is disclosed.

## Description

### Background of the Invention

The desire for improved fuel efficiency in automobiles, trucks, aircraft and the like has led to the need for more fuel efficient tires. One way in which tires can be more fuel efficient is through reduced weight of the tires. It is therefore desirable to reduce the weight of tires while maintaining the physical properties and performance of the various tire components.

### Summary of the Invention

The present invention is directed to a pneumatic tire in accordance with claim 1 and to a method in accordance with claim 9.

Dependent claims refer to preferred embodiments of the invention. Preferably, the tire is a runflat tire.

### Brief Description of the Drawings

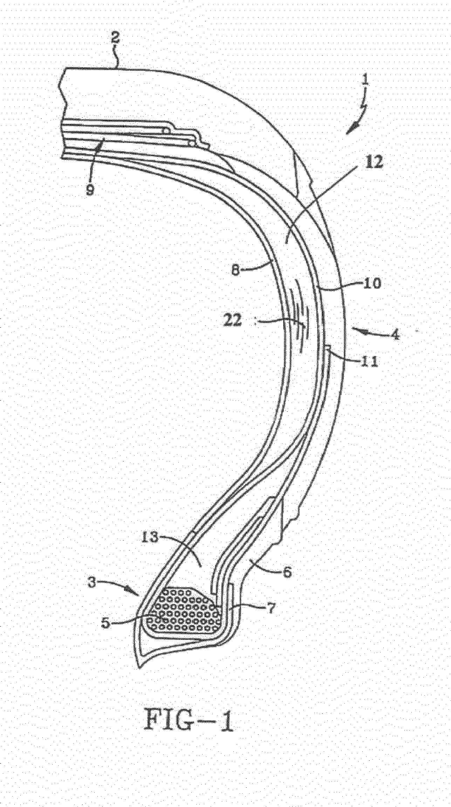

Figure 1 is a fragmentary cross-sectional view of a tire showing its tread and carcass with one ply and one insert axially inward of the ply in the sidewall region of the tire as an embodiment of the invention.

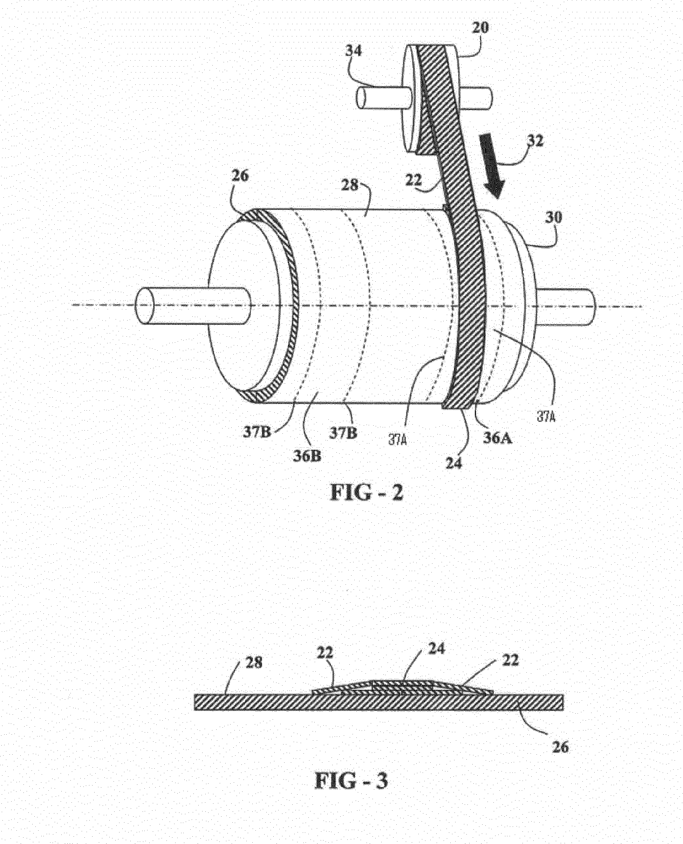

Figure 2 is schematic representation of a method of making a tire according to the present invention.
Figure 3 is cross section of a partially built insert.

### Detailed Description of the Invention

There is disclosed a pneumatic tire, preferably a runflat tire, comprising a sidewall insert, the sidewall insert comprising an axially layered thermoplastic.

There is further disclosed a method of making a pneumatic tire, preferably a runflat tire, comprising the steps of:
applying one or more tire components to a tire building machine; and
applying a plurality of layers of a thermoplastic to the one or more components to form an axially-layered thermoplastic insert.

Tires containing the thermoplastic inserts of this invention comprise a toroidally-shaped carcass and an outer, circumferential tread designed to be ground-contacting, wherein said carcass comprises two spaced-apart inextensible bead portions, two spaced-apart sidewalls each individually extending radially inward from and connecting said tread to said bead portions and preferably at least one cord reinforced ply extending from bead to bead and through the sidewalls. Preferably, a substantially crescent-shaped rubber insert is juxtapositioned to and axially inward of at least one of said carcass plies in one or each of said sidewalls of the tire.

So constructed, the runflat tire with a thermoplastic insert is lighter than prior art runflat tires with conventional inserts made of compounded rubber. Such rubber inserts have a high carbon black content to ensure a sufficient stiffness to support a tire during a deflation episode. By contrast, a runflat tire with a thermoplastic insert has sufficient stiffness, but at lower overall tire weight.

Preferably, the insert has a maximum thickness at a location about midway between the bead portions and the tread in the sidewall region of the tire.

In the practice of this invention, a significant function of the insert in the sidewall portion of the tire is to stiffen/support the sidewall structure when the tire is operated without inflation pressure.

The shape of the insert is described as preferably being substantially crescent in shape. This is intended to also include an entrunkated crescent shape, particularly where the entrunkated portion of the crescent-shaped insert is juxtapositioned to the tire's bead portion.

In further practice of the invention, said tire carcass may have from one to three plies comprising a first axially inner ply and optionally one or two additional plies as a second ply and third ply, respectively. Each additional ply is positioned sequentially axially outward from said first ply in the sidewall region of the tire.

Accordingly, in accordance with a preferred aspect of this invention, said tire contains one ply in its carcass wherein said insert is juxtapositioned to and axially inward of said ply in the sidewall region of the tire.

In further accordance with a preferred aspect of this invention, said tire contains, in its carcass, an axially inner first ply and a second ply axially outward from the first ply; wherein said insert is juxtapositioned to and axially inward of said first ply, in the sidewall region of the tire.

In additional accordance with a preferred aspect of this invention, said tire contains, in its carcass, an axially inner first ply and an axially outer second ply; wherein said insert is juxtapositioned to and interposed between said first and second ply, in the sidewall region of the tire.

In further accordance with a preferred aspect of this invention, said tire contains, in its carcass, an axially inner first ply and an axially outer second ply; wherein one of said inserts is juxtapositioned to and interposed between said first and second ply, in the sidewall region of the tire, and another of said inserts is juxtapositioned to and axially inward of said first ply, in the sidewall region of the tire.

In further accordance with a preferred aspect of this invention, said tire contains, in its carcass, an axially inner first ply, a second ply axially outward from said first ply and a third ply axially outward from said second ply; wherein said insert is juxtapositioned to and axially inward of said first ply, in the sidewall region of the tire.

In additional accordance with a preferred aspect of this invention, said tire contains, in its carcass, an axially inner first ply, a second ply axially outward from said first ply and a third ply axially outward from said second ply; wherein said insert is juxtapositioned to and interposed between (a) said first and second plies and/or (b) said second and third plies, in the sidewall region of the tire.

In further accordance with a preferred aspect of this invention, said tire contains, in its carcass, an axially inner first ply, a second ply axially outward from said first ply and a third ply axially outward from said second ply; wherein said insert is juxtapositioned to and interposed between (a) said first and second plies and/or (b) said second and third plies, in the sidewall region of the tire and, also, an insert juxtapositioned to and axially inward of the innermost of said plies.

In one embodiment, the innermost ply, or plies, has synthetic or textile cord reinforcement of polyester, nylon, rayon or aramid, preferably nylon; while the outermost ply preferably has aramid, rayon, carbon fiber, fiberglass or metal cord reinforcement, preferably brass and/or zinc-coated steel cords.

Thus, in a preferred embodiment, the first ply has reinforcing cords of rayon and the second and additional plies are cords of rayon.

In one aspect, the outermost ply preferably has cords of a higher modulus (i.e., steel cords) and the innermost ply, or plies, have cords of a lower modulus (i.e., nylon or rayon).

At least one ply, preferably the innermost ply, extends from bead core to bead cord and wraps around the bead core. Alternatively, where two or more plies are used, at least one of the additional plies, while extending from bead core to bead core, does not actually wrap around the bead core.

Referring to the drawings, FIG.-1 shows the fragmentary cross-section of a runflat tire 1, its tread 2, bead portion 3, sidewall or sidewall region 4, inextensible wire bead core 5, rubber chafer 6, rubber toeguard 7, rubber composition innerliner 8, belt structure 9 underlying a portion of the tread 2, carcass ply 10, carcass ply turnup 11, thermoplastic insert 12 and apex 13. Thermoplastic insert 12 comprises axially-layered thermoplastic layers 22, as will be discussed in more detail. A similar construction is used on the section of the tire opposite the radial centerline of the tire (not shown). The tire axial direction is indicated by an arrow.

The cords for use in the carcass plies may comprise from one (monofilament) to multiple twisted filaments. The number of total filaments in the cord may range from 1 to 13. The cords, particularly metallic cords, of the carcass ply are generally oriented such that the tire according to the present invention is what is commonly referred to as a radial.

The cords of the carcass ply intersect the equatorial plane (EP) of the tire at an angle in the range of from 75 ° to 105°. Preferably, the cords intersect at an angle of from 82 ° to 98°. A more preferred range is from 89 °to 91 °.

The first and second reinforcing ply structure each may comprise a single ply layer; however, any number of carcass plies may be used. As further illustrated in FIG.-1, the first ply structure has a pair of turnup ends respectively which wrap about each bead core 5 of the bead portion 3 of the carcass. The ends 11 of ply 10 are in proximity to the bead core 5 and terminate radially adjacent on either side of the bead core 5, above the bead core 5 or can be wrapped around the bead core 5 and terminates radially below the turnup end 11 of ply 10 as shown. The turnup ends 11 of ply 10 wrap about the second ply ends and the bead core 5. The turnup ends of the first ply 11 terminates radially a distance above the nominal rim diameter of the tire 1 in proximity to the radial location of the maximum section width of the tire. In a preferred embodiment, the turnup ends are located within 20 percent of the section height of the tire from the radial location of the maximum section width, most preferably terminating at the radial location of the maximum section width.

The bead core 5 is preferably constructed of a single or monofilament steel wire continuously wrapped. Located within the bead region 3 and the radially inner portions of the sidewall portions 4 are high modulus elastomeric apex inserts disposed between ply 10 and the turnup ends 11, respectively. The apex 13 extends from the radially outer portion of bead portions respectively, up into the sidewall portion gradually decreasing in cross-sectional width. The apex 13 terminates at a radially outer end.

The insert 12 may extend from each bead region radially to the edge of the tread, usually to just beneath the reinforcing belt structures 9. As illustrated in FIG.-1, the sidewall portions include a thermoplastic insert 12. Additional inserts (not shown) may be included between additional plies (not shown).

In one embodiment, the inserts 12 each have a thickness at its maximum thickness of at least three percent of the maximum section height "SH" at a location approximately radially aligned to the maximum section width of the tire.

The overall cross-sectional thickness of the combination of elastomeric inserts preceding from the bead portions to the radial location of the maximum section width (SW) is preferably of constant thickness. The overall sidewall and carcass thickness is preferably at least 11.5 mm at the maximum section width location and increases to an overall thickness in the region where it merges into the shoulder near the lateral tread edges. Preferably, the overall thickness of the sidewall in the shoulder region of the tire is at least one hundred percent (100%) of the overall sidewall thickness at the maximum section width (SW). This ratio means that the sidewall can be made substantially thinner than the predecessor-type runflat tires.

As previously discussed, the tire of the present invention has at least one ply having a turnup end 11 (wrapped around the bead core 5) while another ply can simply be terminated adjacent to the bead core 5 without actually wrapping around the bead core 5.

The insert 12 is made of thermoplastic material. The insert 12 is designed to prevent the tire's sidewall from collapsing when operating under no inflation pressure. The material shape and cross-sectional profile is modified to insure the ride performance and sidewall spring rate is acceptable. The cross-sectional area of the insert can be reduced without compromising performance characteristics by utilizing stiffer materials in the insert. Thus, weight can be reduced by using stiffer thermoplastic materials in the insert.

The second insert and third insert, if used, can be of the same or different material physical properties relative to the first insert 12. This means that the combination of a hard second insert, and/or third insert, if used, with a softer first insert 12 is contemplated as well as the combination of a hard first insert 12 with a softer second and/or third insert. The second insert and third insert, if used, are made of thermoplastic or elastomeric material. These inserts can be used in multiples of inserts interposed between adjacent plies when more than two plies are used in the carcass structure.

The second and third inserts, when used, act as a spacer between the adjacent plies. The cords of the plies particularly the radially outer ply is placed in tension when the tire is operated uninflated.

In practice, the compositions for the inserts utilized in this invention for the aforesaid pneumatic tire construction are preferably characterized by physical properties which enhance their utilization in the invention which are, collectively, believed to be a departure from properties of conventional rubber compositions normally used in pneumatic tire sidewalls, particularly the combination of inserts 12 and with plies 10 having a combination of either dissimilar or similar high stiffness yet essentially low hysteresis properties.

In particular, for the purposes of this invention, the aforesaid inserts 12 are designed to have a high degree of stiffness yet also having lower weight than for an inserts not containing the thermoplastic.

The thermoplastic inserts are constructed from multiple, relatively thin layers of thermoplastic material. In one embodiment, the thermoplastic layers each have a thickness in a range of 0.1 to 1 mm. The multiple layers of thermoplastic are layered sequentially in such a way as to form the desired cross-sectional thicknesses and shape suitable for used as a runflat insert. The multiple layers of thermoplastic may be layered using manual or automatic (continuous) methods.

In one embodiment, the thermoplastic insert is constructed using a method as illustrated in FIG. - 2. In FIG. - 2, innerliner material 26 (corresponding to the innerliner 8 in FIG. - 1) has been built onto tire drum 30. Thermoplastic material in the form of a continuous tape is transferred onto surface 28 of innerliner material 26 by unwinding from spool 20 in the direction of arrow 32. Tape 22 is layered to form partially built insert 24 by sequential application of tape 22 during rotation of tire drum 30 and spool 20. Insert regions 36A,B are indicated by the areas between the dashed lines 37A and 37B, respectively. Tape 22 is disposed in regions 36A,B of surface 28; regions 36 correspond to the desired location of the inserts 12 (FIG. - 1).

A partially built insert 24 is shown in cross-section in FIG. - 3, with a plurality of layers of tape 22 disposed on surface 28 of innerliner material 26 after sequential rotations of tire drum 30. The arrow indicates the tire axial direction. As is evident from FIG. - 3, the various layers of tape 22 are stacked and overlapped in such a manner as to form the desired cross-sectional thicknesses and shape of the partially built insert 24. The relative overlap of sequential layers of tape 22 may be controlled by indexing spool 20 along its axle 34.

Upon completion of the desired shaped of partially built insert 24, tape 22 is cut from spool 20. The remaining tire components (sidewall, beads, tread, etc., not shown) are built onto the tire building drum 30 in the conventional manner. Upon removal of the built green tire from the tire drum 30 and formation into the conventional toroidal conformation as depicted in partial cross-section in FIG. - 1, the layers of tape 22 are seen to be axially-layered with respect to the axial direction of the tire 1. The layers of tape 22 are fused by application of heat during cure of tire 1 to form insert 12, or by action of an adhesive applied to tape 22.

The construction of insert 12 from thermoplastic tape layers 22 facilitates use of a thermoplastic insert in a runflat tire. Construction of a thermoplastic insert from a monolithic, preshaped thermoplastic insert material is difficult due to the high modulus of the material. Bending such a monolithic material for use during tire building requires thermal softening of the thermoplastic, which adds a level of complexity in processing and operator handling due to the high temperature. With the present method, the relatively thin tape 22 allows easy handling and application of the thermoplastic during tire building without need for thermal softening.

The insert 12 comprises a plurality of axially layered thermoplastic layers. In one embodiment, the insert comprises at least 10 axially layered thermoplastic layers.

Suitable thermoplastic materials for use as the tape 22 and insert 12 include polyolefin such as polyethylene and polypropylene; polyamides such as nylon 6, nylon 6,6; nylon 6,12; polyesters such as polyethylene terephthalate (PET) and polybutylene terephthalate (PBT); polyphenylene ether (PPE); and polyphthalamide (PPA). Suitable thermoplastics preferably have a melting temperature greater than the temperatures experienced during a runflat event by the tire. In one embodiment, the thermoplastic has a melting temperature greater than 160°C. In one embodiment, the thermoplastic has a melting temperature greater than 130°C.

The thermoplastic material may be treated on its surface with an adhesive to promote adhesion between the layers of tape 22 and the adhesion between the tape 22 and adjacent rubber components of the tire. In one embodiment, the tape 22 is dipped in an RFL (resorcinol-formaldehyde-latex) type adhesive as is known in the rubber compounding art. In one embodiment, the tape 22 is dipped in an epoxy-based adhesive. In one embodiment, the tape 22 is dipped in a combination of RFL and epoxy-based adhesives. The adhesive, if used, is then disposed between the layers of tape 22 in the insert 12.

The tire components other than the thermoplastic insert, such as tread, sidewalls, etc., may be made from rubber compositions with rubbers or elastomers containing olefinic unsaturation. The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of about 20 to about 28 percent bound styrene or, for some applications, an E-SBR having a medium to relatively high bound styrene content, namely, a bound styrene content of about 30 to about 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36 percent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The rubber composition may also include up to 70 phr of processing oil. Suitable process oils include aromatic, paraffinic, napthenic, vegetable oils, and low PCA oils, such as MES, TDAE, SRAE and heavy naphthenic oils.

The vulcanizable rubber composition may include from 10 to 150 phr of silica.

Various commercially available silicas may be used, such as, only for example herein silicas commercially available from PPG Industries under the Hi-Sil trademark with designations 210 and 243; silicas available from Rhodia, with, for example, designations of Z1165MP and Z165GR and silicas available from Degussa AG with, for example, designations VN2 and VN3.

The vulcanizable rubber composition may include from 1 to 100 phr of carbon black, crosslinked particulate polymer gel, ultra high molecular weight polyethylene (UHMWPE) or plasticized starch.

Commonly employed carbon blacks can be used as a conventional filler. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991.

Other fillers may be used in the rubber composition including, but not limited to, particulate fillers including ultra high molecular weight polyethylene (UHMWPE), particulate polymer gels and plasticized starch composite filler.

In one embodiment the rubber composition for use in the tire tread may contain a conventional sulfur containing organosilicon compound. Examples of suitable sulfur containing organosilicon compounds are of the formula:

Z-Alk-Sₙ-Alk-Z II

in which Z is selected from the group consisting of 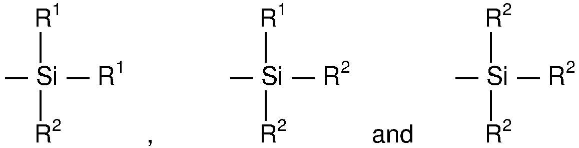 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) sulfides. In one embodiment, the sulfur containing organosilicon compounds are 3,3'-bis(triethoxysilylpropyl) disulfide and 3,3'-bis(triethoxysilylpropyl) tetrasulfide. Therefore, as to formula II, Z may be 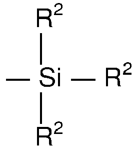 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-B- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from GE Silicones.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr. Typical amounts of tackifier resins, if used, comprise about 0.5 to about 10 phr. Typical amounts of processing aids comprise 1 to 50 phr. Typical amounts of antioxidants comprise 1 to 5 phr. Representative antioxidants may be, for example, diphenyl-p-phenylenediamine. Typical amounts of antiozonants comprise about 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4. In another embodiment, combinations of a primary and a secondary accelerator might be used with the secondary accelerator being used in smaller amounts, such as from about 0.05 to about 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The pneumatic tire of the present invention may be a race tire, passenger tire, aircraft tire, agricultural, earthmover, off-the-road, or truck tire. In one embodiment, the tire is a passenger or a runflat tire. Preferably, the tire is a radial tire.

Vulcanization of the pneumatic tire of the present invention is generally carried out at conventional temperatures ranging from about 100°C to 200°C. Any of the usual vulcanization processes may be used such as heating in a press or mold, heating with superheated steam or hot air.

The runflat tire containing the inserts of this invention can be built, shaped, molded and cured by various methods that will be readily apparent to those having skill in the art.

## Claims

**1.** A pneumatic tire comprising a sidewall insert, the sidewall insert (12) comprising an axially layered thermoplastic (22).

**2.** The pneumatic tire of claim 1, wherein the thermoplastic is selected from the group consisting of polyethylene, polypropylene, polyamide, polyester, polyphenylene ether, and polyphthalamide.

**3.** The pneumatic tire of claim 1 or 2, wherein the sidewall insert (12) further comprises an adhesive selected from the group consisting of an RFL adhesive and an epoxy-based adhesive.

**4.** The pneumatic tire of at least one of the previous claims, wherein the sidewall insert (12) comprises a plurality of thermoplastic layers (22).

**5.** The pneumatic tire of claim 4, wherein the thermoplastic layers (22) have a layer thickness in a range of from 0.1 mm to 1 mm.

**6.** The pneumatic tire of at least one of the previous claims, wherein the sidewall insert (12) comprises at least 10 axially layered thermoplastic layers (22).

**7.** The pneumatic tire of at least one of the previous claims, wherein the sidewall insert (12) comprises a plurality of thermoplastic layers (22), wherein an adhesive is disposed between the thermoplastic layers (22).

**8.** The pneumatic tire of at least one of the previous claims, wherein the tire is a runflat tire (1).

**9.** A method of making a pneumatic tire, the method comprising the steps of:
applying one or more tire components to a tire building machine (30); and
applying a plurality of layers (22) of a thermoplastic to the one or more components to form an axially-layered thermoplastic insert (12).

**10.** The method of claim 9, wherein the thermoplastic is selected from the group consisting of polyethylene, polypropylene, polyamide, polyester, polyphenylene ether, and polyphthalamide.

**11.** The method of claim 9 or 10, wherein the insert (12) further comprises an adhesive selected from the group consisting of an RFL adhesive and an epoxy-based adhesive.

**13.** The method of at least one of the claims 9 to 11, wherein the insert (12) comprises a plurality of thermoplastic layers (22), and, optionally, wherein an adhesive is disposed between the thermoplastic layers.

**14.** The method of claim 1, wherein the sidewall insert comprises a plurality of thermoplastic layers, preferably at least 10 axially layered thermoplastic layers, wherein the thermoplastic layers have a layer thickness ranging from 0.1 to 1 mm.

**15.** The method of at least one of the claims 9 to 14, wherein the tire is a runflat tire (1) and wherein the insert (12) is a sidewall insert.
